# EUROPEAN PATENT SPECIFICATION

(11) **EP 3 432 112 B1**
(45) Date of publication and mention of the grant of the patent: **08.12.2021**
(21) Application number: 17182237.2
(22) Date of filing: 20.07.2017
(51) Int. Cl.: G05D 7/01

(54) **VALVE ARRANGEMENT FOR CONTROLLING OF FLOW OF A HEATING OR COOLING FLUID**
VENTILANORDNUNG ZUR REGELUNG DES DURCHFLUSSES EINER HEIZ- ODER KÜHLFLÜSSIGKEIT
AGENCEMENT DE SOUPAPE POUR CONTRÔLER LE DÉBIT D'UN FLUIDE DE CHAUFFAGE OU DE REFROIDISSEMENT

(43) Date of publication of application: 23.01.2019
(73) Proprietor: Danfoss A/S, 6430 Nordborg (DK)
(72) Inventor: CHRISTENSEN, Morten, 6430 Nordborg (DK)
(74) Representative: Keil & Schaafhausen Patentanwälte PartGmbB

(56) References cited:
- EP-A1- 2 693 287
- EP-A1- 2 818 960
- WO-A1-2012/100777
- US-A1- 2014 252 261
- US-A1- 2016 139 606

## Description

The present invention relates to a valve arrangement for controlling a flow of a heating or cooling fluid according to the preamble of claim 1.

Such a valve arrangement is known, for example, from EP 2 482 160 A1. Further valve arrangements of this kind are known from EP 2 818 960 A1, US 2016/0139 606 A1, EP 2 693 287 A1, and WO2012/100777 A1.

US 2014/0252261 A1 shows a flow regulating valve in which a flow of a liquid is controlled by means of an external pressure.

The regulating valve element and the regulating valve seat together form the main parts of a pressure control valve. The pressure control valve can be used to keep constant a pressure difference over a flow control valve so that the flow through the flow control valve depends only on the distance between a valve element and a valve seat of the flow control valve.

The regulating valve element is moved, when a pressure difference between both sides of the membrane changes. This movement changes the distance between the regulating valve element and the regulating valve seat and thereby changes the throttling characteristic of the pressure regulating valve.

The object underlying the invention is to have a good regulation of flow.

This object is solved with a valve arrangement as defined in claim 1.

The membrane is, at least in the flexible part, made of a flexible material, for example rubber or a plastic material. When a pressure difference exists over the membrane, this material is deformed. Since an expansion space is provided on a radially inner side of the flexible part of the membrane, the deformation of the radially inner side of the flexible part of the membrane is possible. The regulation valve element can be moved basically freely without a damping function. This improves the regulation of the flow and reduces loss capacities from friction during operation.

In an embodiment of the invention a radially outer expansion space is provided on a radially outer side of the flexible part of the membrane. When the pressure difference exists over the membrane, the flexible part of the membrane can be deformed radially inwardly and at the same time radially outwardly. This improves the regulation further.

In an embodiment of the invention the radially inner expansion space and the radially outer expansion space are dimensioned to allow a symmetrically radial expansion of the flexible part of the membrane. The flexible part of the membrane has in principle a section in form of an U. Both shanks of the U can be deformed, one shank radially inwardly and the other shank radially outwardly. Such a symmetrical deformation shows good results for the regulation.

In an embodiment of the invention the fixation element comprises a plate-like section fixing the membrane at the regulating valve element and a circumferential wall, wherein an outer diameter of the wall at least over a part of its axial length is smaller than an outer diameter of the plate-like section. Thus, the fixation element comprises a kind of recess on its circumference. This recess is available for the radially inner expansion space.

In an embodiment of the invention the wall comprises a membrane support structure in a part remote from the plate-like section. This membrane support structure is used to protect the membrane when high pressure differences over the membrane occur.

In an embodiment of the invention the membrane support structure has a larger outer diameter than the plate-like section. The membrane support structure does not only support the membrane on the radially inner side, but also on a bottom part, at least partially.

In an embodiment of the invention the membrane support structure comprises a radial protrusion running in circumferential direction around the wall. This is a simple way of realizing the membrane support structure.

In an embodiment of the invention the membrane support structure comprises an inclined support surface. In this way it is possible that the membrane lays smooth against the membrane support structure.

A preferred embodiment of the invention will now be described in more detail with reference to the drawing, in which:
- Fig. 1: shows schematically a section of a valve arrangement and
- Fig. 2: is a detail A of Fig. 1.

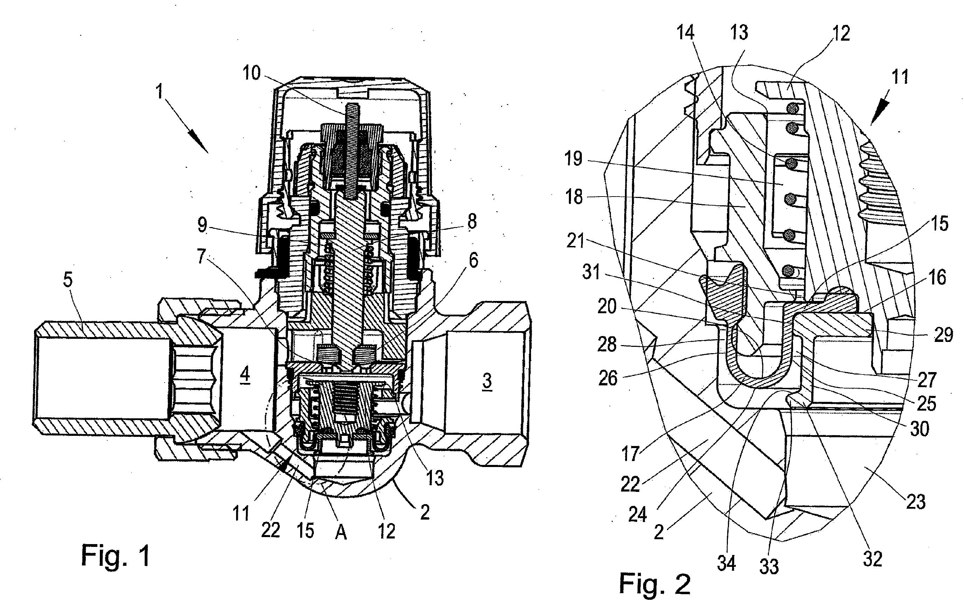

Fig. 1 shows a valve arrangement 1 having a housing 2. The housing 2 has an inlet 3 and an outlet 4. The outlet 4 is connected to an outlet tube 5.

A control valve comprising a control valve element 6 and a control valve seat 7 is arranged between the inlet 3 and the outlet 4. The control valve element 6 is connected to a spindle 8 which is loaded in an opening direction by a control valve spring 9. The spindle 8 can be actuated by means of a thermostatic actuator (not shown) via a pin 10. However, other means can be used as well for actuating the spindle.

When the control valve element 6 is moved in a direction towards the control valve seat 7 the flow from the inlet 3 to the outlet 4 is throttled. When the control valve element 6 is moved in a direction away from the control valve seat 7 the flow resistance of the control valve is decreased.

A pressure regulating valve 11 is arranged between the inlet 3 and the flow control valve 6, 7. The pressure regulating valve 11 comprises a pressure regulating valve element 12 cooperating with a regulating valve seat 13. Fig. 1 and 2 show the pressure regulating valve 11 in an open stage.

The pressure regulating valve element 12 is loaded by a spring 14 in an opening direction, i.e. in a direction away from the regulating valve seat 13.

The regulating valve element 12 is connected to a membrane 15 by means of a fixing element 16 (Fig. 2). The membrane 15 has a flexible part 17 in which the membrane 15 can be deformed when the regulating valve element 12 is moved. The pressure regulating valve element 12 is moved when a force resulting from a pressure difference over the membrane 15 is not equal to the force generated by the spring 14. The pressure regulating valve element 12 is moved until the corresponding forces are balanced again.

The pressure regulating valve 11 comprises a cage-like housing 18. The regulating valve seat 13 is part of the housing 18. The regulating valve element 12 is positioned within the housing 18 over the greatest part of its length. The spring 14 is arranged between the housing 18 and the regulating valve element 12.

The inlet 3 is in fluid connection with the interior 19 of the housing. Therefore, the fluid pressure of the inlet 3 is on side 20 of the membrane 15. To simplify the following explanation, this side 20 is called "upper side".

A connecting channel 22 is arranged between the outlet 4 and a chamber 23. A pressure in the chamber 23 is arranged on the other side 24 of the membrane 15. This other side 24 is called "lower side".

The flexible part 17 of the membrane has a section in form of a "U". This "U" has a radially inner side 25 and a radially outer side 26. A radially inner expansion space 27 is provided on the radially inner side 25 of the flexible part 17 of the membrane 15. A radially outer expansion space 28 is provided on the radially outer side 26 of the flexible part 17 of the membrane 15.

When a pressure difference exists over the flexible part 17 of the membrane 15, wherein the pressure from the upper side 20 is larger than the pressure on the lower side 24, the flexible part 17 of the membrane 15 is "inflated", i.e. both legs of the flexible part 17 can be deformed, a radially inner part can be deformed into the radially inner expansion space 27 and a radially outer part can be deformed into the radially outer expansion space 28. The deformation of the flexible part 17 can be symmetrical with respect to the radial middle between the two parts or legs. This design allows the pressure regulating valve 11 to perform freely without any damping function. It improves a regulation of constant flow and reduces loss of capacity from friction during operation.

However, it is possible that the radial width of the radially inner expansion space 27 is slightly larger than the radial width of the radially outer expansion space 28.

The fixation element 16 comprises a plate-like section 29 with which the membrane 15 is clamped to the regulating valve element 12. Furthermore, the fixation element 16 comprises a circumferential wall 30. The circumferential wall 30 is slightly offset radially inwardly with respect to a radial outer edge 31 of the plate-like element 29, so that the radially inner expansion space 27 is formed in a recess. The wall 30 limits the radially inner expansion space 27 to a radially inner side. However, the radially inner expansion space 27 is large enough to accommodate the radially inner leg of the U of the flexible part 17 of the membrane 15, when a corresponding pressure difference occurs.

The wall 30 comprises a membrane support structure 32 in a part remote from the plate-like element 29. The membrane support structure 32 can preferably be at the lower end of the wall 30, i.e. the end remote from the regulating valve element 12.

The membrane support structure comprises or is in form of a radial protrusion 33. The radial protrusion 33 can run continuously in circumferential direction around the wall 33. However, it is also possible that this protrusion 33 is interrupted in circumferential direction. The membrane support structure 32 comprises an inclined supporting surface 34 on the side facing the flexible part 17 of the membrane 15.

The outer diameter of the membrane support structure 32 is larger than the outer diameter of the plate-like section 29 of the fixation element 16.

If the diameter of the chamber 23 was made with almost the same diameter as the wall 30 then the protrusion 33 could be avoided (this solution would still offer the necessary membrane support).

When the pressure regulating valve 11 is open (as shown in the drawing) and a pressure difference of the membrane 15 occurs tending to close the pressure regulating valve 11, this pressure difference deforms the flexible part 17 of the membrane slightly. However, such a deformation does not cause a friction since the two legs of the "U" of the flexible part 17 of the membrane 15 can bulge freely into the expansion spaces 27, 28.

If the pressure difference is large enough, the flexible part 17 is deformed such that it rests against the membrane supporting structure 32 and against a part of the housing 2.

## Claims

1. Valve arrangement (1) for controlling a flow of a heating or cooling fluid, said valve arrangement (1) comprising: a housing (2) having an inlet (3) and an outlet (4), and a pressure regulating valve (11) being arranged between said inlet (3) and said outlet (4) and having a regulating valve element (12) and a regulating valve seat (13), said regulating valve element (12) being connected to a membrane (15), said membrane (15) having a flexible part (17) in form of a "U" having two deformable legs, **characterized in that** a radially inner expansion space (27) is provided on a radially inner side (25) of the flexible part (17) of the membrane (15), into which a radially inner part of the flexible part (17) can be deformed.

2. Valve arrangement according to claim 1, **characterized in that** a radially outer expansion space (28) is provided on a radially outer side (26) of the flexible part (17) of the membrane (15).

3. Valve arrangement according to claim 2, **characterized in that** the radially inner expansion space (27) and the radially outer expansion space (28) are dimensioned to allow a symmetric radial expansion of the flexible part (17) of the membrane (15).

4. Valve arrangement according to claim 2 or 3, **characterized in that** the radially inner expansion space (27) has a larger radial width than the radially outer expansion space (28).

5. Valve arrangement according to any of claims 1 to 4, **characterized in that** a fixation element (16) is arranged on the side of the membrane (15) opposite the regulating valve element (12), wherein the fixation element (16) limits the radially inner expansion space (27) to a radially inner side.

6. Valve arrangement according to claim 5, **characterized in that** the fixation element (16) comprises a plate-like section (29) fixing the membrane (15) at the regulating valve element (12) and a circumferential wall (30), wherein an outer diameter of the wall (30) at least over a part of its axial length is smaller than an outer diameter of the plate-like section (29).

7. Valve arrangement according to claim 6, **characterized in that** the wall (30) comprises a membrane support structure (32) in a part remote from the plate-like section (29).

8. Valve arrangement according to claim 7, **characterized in that** the membrane support structure (32) is arranged at an end of the wall (30).

9. Valve arrangement according to claim 7 or 8, **characterized in that** the membrane support structure (32) has a larger outer diameter than the plate-like section (29).

10. Valve arrangement according to any of claims 7 to 9, **characterized in that** the membrane support structure (32) comprises a radial protrusion (33) running in circumferential direction around the wall (30).

11. Valve arrangement according to any of claims 7 to 10, **characterized in that** the membrane support structure (32) comprises an inclined supporting surface (34).

## Patentansprüche

1. Ventilanordnung (1) zur Steuerung eines Stroms eines Heiz- oder Kühlfluids, wobei die Ventilanordnung (1) aufweist: ein Gehäuse (2) mit einem Einlass (3) und einem Auslass (4), und ein Druckregelventil (11), das zwischen dem Einlass (3) und dem Auslass (4) angeordnet ist und ein Regelventilelement (12) und einen Regelventilsitz (13) aufweist, wobei das Regelventilelement (12) mit einer Membran (15) verbunden ist, wobei die Membran (15) einen flexiblen Teil (17) in Form eines "U" mit zwei verformbaren Schenkeln aufweist, **dadurch gekennzeichnet, dass** ein radial innerer Ausdehnungsraum (27) auf einer radial inneren Seite (25) des flexiblen Teils (17) der Membran (15) vorgesehen ist, in den ein radial innerer Teil des flexiblen Teils (17) verformt werden kann.

2. Ventilanordnung nach Anspruch 1, **dadurch gekennzeichnet, dass** an einer radial äußeren Seite (26) des flexiblen Teils (17) der Membran (15) ein radial äußerer Ausdehnungsraum (28) vorgesehen ist.

3. Ventilanordnung nach Anspruch 2, **dadurch gekennzeichnet, dass** der radial innere Ausdehnungsraum (27) und der radial äußere Ausdehnungsraum (28) so dimensioniert sind, dass sie eine symmetrische radiale Ausdehnung des flexiblen Teils (17) der Membran (15) erlauben.

4. Ventilanordnung nach Anspruch 2 oder 3, **dadurch gekennzeichnet, dass** der radial innere Ausdehnungsraum (27) eine größere radiale Breite aufweist als der radial äußere Ausdehnungsraum (28).

5. Ventilanordnung nach einem der Ansprüche 1 bis 4, **dadurch gekennzeichnet, dass** auf der dem Regelventilelement (12) gegenüberliegenden Seite der Membran (15) ein Fixierelement (16) angeordnet ist, wobei das Fixierelement (16) den radial inneren Ausdehnungsraum (27) zu einer radial inneren Seite begrenzt.

6. Ventilanordnung nach Anspruch 5, **dadurch gekennzeichnet, dass** das Fixierelement einen plattenförmigen Abschnitt (29), der die Membran (15) am Regelventilelement (12) fixiert, und eine umlaufende Wand (30) aufweist, wobei ein Außendurchmesser der Wand (30) zumindest über einen Teil ihrer axialen Länge kleiner ist als ein Außendurchmesser des plattenförmigen Abschnitts (29).

7. Ventilanordnung nach Anspruch 6, **dadurch gekennzeichnet, dass** die Wand (30) in einem von dem plattenförmigen Abschnitt (29) entfernten Teil eine Membranstützstruktur (32) aufweist.

8. Ventilanordnung nach Anspruch 7, **dadurch gekennzeichnet, dass** die Membranstützstruktur (32) an einem Ende der Wand (30) angeordnet ist.

9. Ventilanordnung nach Anspruch 7 oder 8, **dadurch gekennzeichnet, dass** die Membranstützstruktur (32) einen größeren Außendurchmesser als der plattenförmige Abschnitt (29) aufweist.

10. Ventilanordnung nach einem der Ansprüche 7 bis 9, **dadurch gekennzeichnet, dass** die Membranstützstruktur (32) einen radialen Vorsprung (33) aufweist, der in Umfangsrichtung um die Wand (30) herum verläuft.

11. Ventilanordnung nach einem der Ansprüche 7 bis 10, **dadurch gekennzeichnet, dass** die Membranstützstruktur (32) eine schräge Stützfläche (34) aufweist.

## Revendications

1. Agencement de soupape (1) pour commander un débit d'un fluide de chauffage ou de refroidissement, ledit agencement de soupape (1) comprenant : un logement (2) ayant une entrée (3) et une sortie (4), et une soupape de régulation de pression (11) étant agencée entre ladite entrée (3) et ladite sortie (4) et ayant un élément de soupape de régulation (12) et un siège de soupape de régulation (13), ledit élément de soupape de régulation (12) étant connecté à une membrane (15), ladite membrane (15) ayant une partie flexible (17) en forme d'un « U » ayant deux branches déformables, **caractérisé en ce qu'**un espace d'expansion intérieure radiale (27) est prévu sur un côté intérieur radial (25) de la partie flexible (17) de la membrane (15), dans lequel une partie intérieure radiale de la partie flexible (17) peut être déformée.

2. Agencement de soupape selon la revendication 1, **caractérisé en ce qu'**un espace d'expansion extérieure radiale (28) est prévu sur un côté extérieur radial (26) de la partie flexible (17) de la membrane (15).

3. Agencement de soupape selon la revendication 2, **caractérisé en ce que** l'espace d'expansion intérieure radiale (27) et l'espace d'expansion extérieure radiale (28) sont dimensionnés pour permettre une expansion radiale symétrique de la partie flexible (17) de la membrane (15).

4. Agencement de soupape selon la revendication 2 ou 3, **caractérisé en ce que** l'espace d'expansion intérieure radiale (27) a une largeur radiale plus grande que l'espace d'expansion extérieure radiale (28).

5. Agencement de soupape selon l'une quelconque des revendications 1 à 4, **caractérisé en ce qu'**un élément de fixation (16) est agencé sur le côté de la membrane (15) opposé à l'élément de soupape de régulation (12), dans lequel l'élément de fixation (16) limite l'espace d'expansion intérieure radiale (27) à un côté intérieur radial.

6. Agencement de soupape selon la revendication 5, **caractérisé en ce que** l'élément de fixation (16) comprend une section de type plaque (29) fixant la membrane (15) à l'élément de soupape de régulation (12) et une paroi circonférentielle (30), dans lequel un diamètre extérieur de la paroi (30) au moins sur une partie de sa longueur axiale est plus petit qu'un diamètre extérieur de la section de type plaque (29).

7. Agencement de soupape selon la revendication 6, **caractérisé en ce que** la paroi (30) comprend une structure de support de membrane (32) dans une partie distante de la section de type plaque (29).

8. Agencement de soupape selon la revendication 7, **caractérisé en ce que** la structure de support de membrane (32) est agencée à une extrémité de la paroi (30) .

9. Agencement de soupape selon la revendication 7 ou 8, **caractérisé en ce que** la structure de support de membrane (32) a un diamètre extérieur plus grand que la section de type plaque (29).

10. Agencement de soupape selon l'une quelconque des revendications 7 à 9, **caractérisé en ce que** la structure de support de membrane (32) comprend une saillie radiale (33) passant dans la direction circonférentielle autour de la paroi (30).

11. Agencement de soupape selon l'une quelconque des revendications 7 à 10, **caractérisé en ce que** la structure de support de membrane (32) comprend une surface de support inclinée (34).
